# EUROPEAN PATENT APPLICATION

(11) **EP 2 725 598 A1**
(43) Date of publication of application: **30.04.2014**
(21) Application number: 12802401.5
(22) Date of filing: 21.06.2012
(51) Int. Cl.: H01H 11/04, H01H 1/023, H01H 1/04

(54) **METHOD OF MANUFACTURING COMPOSITE CONTACT**

(30) Priority: 24.06.2011 JP 2011141053; 13.01.2012 CN 201210010406
(71) Applicant: Mitsubishi Materials C.M.I. Corporation, Susono-shi Shizuoka 410-1116 (JP)
(72) Inventor: KITA, Koichi, Susono-City Shizuoka 410-1116 (JP); UMEOKA, Hideki, Susono-City Shizuoka 410-1116 (JP); MURAHASHI, Noriaki, Susono-City Shizuoka 410-1116 (JP); YAMANASHI, Shinji, Susono-City Shizuoka 410-1116 (JP); INABA, Akihiko, Susono-City Shizuoka 410-1116 (JP); TAKIZAWA, Hideo, Kitamoto-shi Saitama 364-0022 (JP)
(74) Representative: HOFFMANN EITLE
(86) International application number: PCT/JP2012/065870
(87) International publication number: WO 2012/176843

(57) **Abstract**

To improve a bonding strength of an interface using a small amount of silver-alloy, to decrease a waste by manufacturing, and to obtain a composite contact having an excellent durability with a stable contact-performance for a long period.

A method of manufacturing a composite contact in which a flange section with a large diameter at an end of a base part with a small diameter, the composite contact having: a contact section which is made from silver alloy into an upper-surface part of the flange section; and a leg section which is made from copper alloy by forming a large-diameter part so as to form a lower-surface part of the flange section is made integrally with the base part, having the steps of: a primary-forming process forging a copper-alloy wire (12) and a silver-alloy wire (13) having a smaller diameter than that of the copper-alloy wire in a hole (21) of a forming die in a state of being butted to each other so as to form a primary-formed body including a silver-alloy part and a copper-alloy part so that the wires are bonded with each other by expanding an outer diameter of the silver-alloy wire (13) into an inner diameter of the hole (21) in a state in which radial-expansion of the copper-alloy wire (12) is restricted by an inner peripheral surface of the hole (21); and a secondary-forming process forging an end part of the primary-formed body including the silver-copper part, a bonding interface between the silver-alloy part and the copper-alloy part, and the copper-alloy part so as to form the flange section.

## Description

### BACKGROUND OF THE INVENTION

### Technical Field

The present invention relates to a method of manufacturing a composite contact which includes less silver alloy but has a steady contact property for a long period and has an excellent durability.

Priority is claimed on Japanese Patent Application No. 2011-14053, filed June 24, 2011 and Chinese Patent Application No. 201210010406.9, filed January 13, 2012, the content of which is incorporated herein by reference.

### Background Art

As an electrical contact for relays, switches, electro-magnetic switches, breakers or the like, a composite contact in which only a contact point is made from silver-alloy material and the other part is substituted by cupper-based material for sake of saving silver is broadly used in place of a single contact which is made from silver alloy. This kind of composite contact is formed so as to have a rivet-shape as a whole in which a flange section with a large diameter is formed at an end part of a base part with a small diameter: and the composite contact has: a contact section which is made from silver alloy into an upper-surface part of the flange section; and a leg section which is made from copper alloy by forming a large-diameter part on which a back surface of the contact section is joined is made integrally with the base part.

Such a composite contact is formed by butting a copper-alloy wire for the leg section and a silver-alloy wire for the contact section and forging them. It is general to divide a bonding process into two or more times in order to prevent eccentricity by joining.

In Patent Document 1, it is disclosed to form the copper-alloy wire and the silver-alloy wire into by pressure-bonding of an butt part of the copper-alloy wire and the silver-alloy wire which are concentrically butted in a die having an opening part which is expanded as a bugle so as to swell outward for preforming; and then by upsetting forging the rivet-shape for secondary (finishing) forming.

In such a case by butt joint, bonding strength between the silver-alloy and the copper-alloy may be easy to deteriorate at an outer circumferential part after forming, so that there is a fear that the silver-alloy and the copper-alloy are separated by thermal stress while being used as a contact point and the durability may deteriorate. Therefore, in order to prevent it, it is suggested to use only a center part having an excellent bonding strength by removing the outer circumferential part in which the bonding strength is weak after expanding the outer circumferential part to be larger than an outer diameter of an objective shape (Patent Document 2).

### Citation List

### Patent Literature

Patent Document 1: Japanese Unexamined Patent Application, First Publication No. S61-121214
Patent Document 2: Japanese Unexamined Patent Application, First Publication No. H04-298927

### SUMMARY OF INVENTION

### Problems to be Solved by the Invention

However, according to Patent Document 2, even though firm bonding strength can be obtained, there is a problem in that the outer circumferential part is a waste.

According to the Patent Documents, the copper-alloy wire and the silver-alloy wire having the same diameter are used. However, the silver-alloy wire having smaller diameter than the copper-alloy wire can be used in order to facilitate cutting or bonding processes of the wires, since a used amount of the silver alloy is less than that of the copper alloy. In a case in which the wires having different diameters are bonded, it is more wasteful by a previous bonding method since the outer circumferential part of a bonded part is not bonded enough. Furthermore, it is difficult to form a flat bonding interface because the silver-alloy with the small diameter sinks into the copper-alloy as an initial deformation of forging.

The present invention is achieved in consideration of the above circumstances, and has an object to provide a method of manufacturing which can improve the bonding strength at the interface with a small amount of the silver-alloy, the waste by manufacturing can be decreased, and which can obtain a composite contact having an excellent durability with the stable contact-performance for a long period.

### Means for Solving the Problem

According to Patent Document 1, a bonding interface is expanded larger than an outer diameter of a leg section of an objective shape by a hard process in a preforming step with intent to flatten the bonding interface, and relatively small processing is performed in a secondary forming. However, as a result of earnest research in a bonding strength of an interface in a composite contact, the inventors of the present invention found that: with respect to a bonding strength between copper alloy and silver alloy, it is important to greatly deform a bonded part in a secondary-forming after a primary-forming for bonding the wires; and the bonding strength has a high correlation with the deformation amount. In this point, the bonding strength is deteriorated if Patent Document 1 in which the deformation amount in the secondary forming is relatively small is applied. In a forging method described in Patent Document 1, it is required for silver alloy and copper alloy to have the same diameter as a precondition. If the amount of silver alloy is small and a wire diameter of silver alloy is smaller than a wire diameter of copper alloy, it is difficult to obtain a flat bonding interface.

The present invention is the below solution under the above knowledge.

The present invention is a method of manufacturing composite contact in which a flange section with a large diameter is formed at an end part of a base part with a small diameter, the composite contact having: a contact section which is made from silver alloy into an upper-surface part of the flange section; and a leg section which is made from copper alloy by forming a large-diameter part on which a back surface of the contact section is joined so as to form a lower-surface part of the flange section integrally with the base part with the small diameter, having the steps of: a primary-forming process forging a copper-alloy wire and a silver-alloy wire having an outer diameter smaller than that of the copper-alloy wire in a hole of a forming die in a state of being butted to each other so as to form a primary-formed body including a silver-alloy part and a copper-alloy part so that the silver-alloy wire and the copper-alloy wire are bonded by expanding the outer diameter of the silver-alloy wire into an inner diameter of the hole in a state in which radial-expansion of the copper-alloy wire is restricted by an inner peripheral surface of the hole; and a secondary-forming process forging an end part of the primary-formed body including the silver-copper part, a bonded part between the silver-alloy part and the copper-alloy part, and the copper-alloy part so as to form the flange section.

In the primary-forming process, with restricting the radial-expansion by forging of the copper-alloy wire at the inner peripheral surface of the hole of the forming die, the silver-alloy wire having the smaller outer diameter is expanded to the inner diameter of the hole and bonded. In the secondary-forming process, the bonded part is deformed so as to be radially-expanded further. Accordingly, in the secondary-forming process, the bonded part of the copper-alloy part and the silver-alloy part forms a newly-formed surface and is radially-expanded, so that the newly-formed surface is always pressed. Therefore, it is possible to obtain the bonded part which is strong up to an outer peripheral edge. As a result, it is not necessary to remove the outer circumferential part as described in Patent Document 2, so that no waste is generated.

In the method of manufacturing composite contact according to the present invention, it is preferable that: the hole be formed by an opening part of a die of the forming die; and in the primary-forming process, the copper-alloy wire be held with being inserted in the hole with maintaining an interspace part between an opening-end part of the hole so that the silver-alloy wire and the copper-alloy wire be forged in the interspace part.

Alternatively, it may be that the forming die is provided with a sleeve having a same inner diameter as that of the opening part of the die so as to extend the opening part of the die; the sleeve forms the hole; and at least a base-end part of the copper-alloy wire is held with being inserted in the opening part of the die so that the silver-alloy wire and the copper-alloy wire are forged in the hole of the sleeve.

Whichever by the methods, it is possible to bond while expanding to the inner diameter of the hole of the die or the hole of the sleeve by forging the silver-alloy wire in a state in which the radial-expansion of the copper-alloy wire is restricted, and then the deformation amount in the secondary-forming process can be large. In addition, in the state in which the radial-expansion of the copper-alloy wire is restricted by the inner peripheral surface of the hole of the forming die, it allows to radially-expand the copper-alloy wire at a gap generated between the outer peripheral surface of the copper-alloy wire and the peripheral surface of the hole of the forming die. That is to say, when forging the copper-alloy wire and the silver-alloy wire having the outer diameter smaller than the copper-alloy wire in the hole of the forming die in a state of butting, it is proper that the outer peripheral surface of the copper-alloy wire after forging is expanded not larger than the inner diameter of the hole by being contact with the inner peripheral surface of the hole of the forming die.

In those methods, the hole may be formed to have an inner diameter which is substantially a same as an outer diameter of the copper-alloy wire; or the hole may be formed to have an inner diameter which is larger than the outer diameter of the copper-alloy wire so that a ring-like interspace part is formed between the outer peripheral surface of the copper-alloy wire.

In a case in which the inner diameter of the opening part of the die of the forming die is larger than the outer diameter of the copper-alloy wire, in order to dispose the copper-alloy wire at a center of the opening part of the die of the forming die, a hollow part having a tapered surface at a peripheral edge part may be formed at a top end of an ejector pin which is contact with a lower end of the copper-alloy wire in the opening part.

### Effects of the Invention

According to the method of manufacturing composite contact of the present invention, with restricting the deformation of the copper-alloy wire, the silver-alloy wire having the outer diameter smaller than the copper-alloy wire is deformed to the inner diameter of the hole of the forming die and bonded in the primary-forming process, and in the secondary-forming process, the bonded part is radially-expanded with being always applied pressure, so that it is possible to obtain the strong bonded part up to the outer peripheral edge. Therefore, the bonding strength of the interface can be improved by a small amount of the silver alloy, the waste by manufacturing can be eliminated, and composite contact having the excellent durability with the stable contact-performance for a long period can be obtained.

### BRIEF DESCRIPTION OF DRAWING

[FIG. 1] It is a vertical cross-sectional view showing an embodiment of a composite contact according to the present invention.
[FIG. 2] It is a vertical cross-sectional view showing a forming die used for a first embodiment of a method of manufacturing the composite contact in FIG. 1.
[FIG. 3] It is a vertical cross-sectional view showing a state in which a copper-alloy wire and a silver-alloy wire are disposed right above a hole of a die of the forming die in FIG. 2.
[FIG. 4] It is a vertical cross-sectional view showing a state in which the copper-alloy wire is inserted into the hole of the die, altered from the state shown in FIG. 3.
[FIG. 5] It is a vertical cross-sectional view showing a state in which the silver-alloy wire is forged, altered from the state shown in FIG. 4.
[FIG. 6] It is a vertical cross-sectional view showing a state in which a punch and a punch sleeve are evacuated, and a part of a primary-formed body including a silver-alloy part and a copper-alloy part is protruded from the hole of the die, altered from the state shown in FIG. 5.
[FIG. 7] It is a vertical cross-sectional view showing a state in which a punch for secondary-forming faces the primary-formed body of FIG. 6.
[FIG. 8] It is a vertical cross-sectional view showing a state in which a flange section is formed by forging the primary-formed body, altered from the state shown in FIG. 7.
[FIG. 9] It is a vertical cross-sectional view showing a forming die used for a second embodiment of the method of manufacturing according to the present invention in a state in which a copper-alloy wire and a silver-alloy wire are disposed.
[FIG. 10] It is a vertical cross-sectional view showing a state in which a primary-formed body is formed, altered from the state shown in FIG. 9.
[FIG. 11] It is a vertical cross-sectional view showing a forming die used for a third embodiment of the method of manufacturing according to the present invention in a state in which a copper-alloy wire and a silver-alloy wire are disposed.
[FIG. 12] It is a vertical cross-sectional view showing a state in which a primary-formed body is formed, altered from a state shown in FIG. 11.
[FIG. 13] It is a vertical cross-sectional view showing a forming die used for a fourth embodiment of the method of manufacturing according to the present invention in a state in which a copper-alloy wire and a silver-alloy wire are disposed.
[FIG. 14] It is a vertical cross-sectional view showing a state in which a primary-formed body is formed, altered from a state shown in FIG. 13.
[FIG. 15] It is a vertical cross-sectional view showing a state in which a primary-formed body is formed according to a comparative example.
[FIG. 16] It is a cross-sectional photograph of composite contacts in which the part (a) shows the comparative example and the part (b) shows an example.

### DESCRIPTION OF EMBODIMENTS

Below, an embodiment of a composite contact according to the present invention will be explained with reference to drawings.

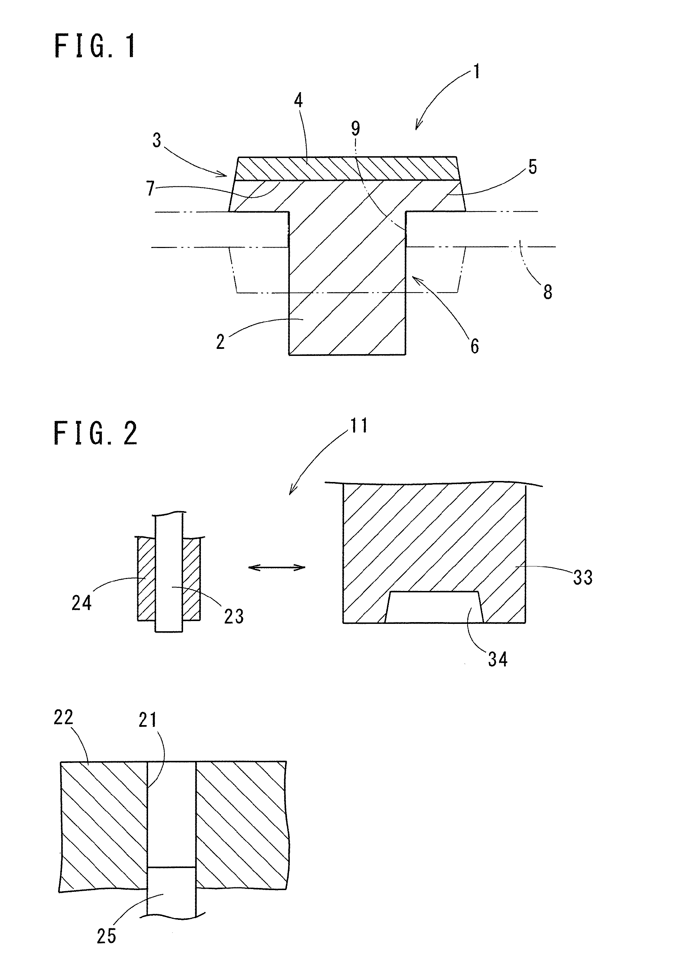

As shown in FIG. 1, a composite contact 1 is formed so as to have a rivet-shape in which a flange section 3 with a large diameter is formed at an end part of a base part 2 with a small diameter: and the composite contact 1 has: a contact section 4 which is made from silver alloy into an upper-surface part of the flange section 3; and a leg section 6 which is made from copper alloy by forming a large-diameter part 5 integrally with the base part 2, in which the large-diameter part 5 is disposed at a back surface of the contact section 4 and forms a lower-surface part of the flange section 3 with being bonded with the contact section 4. A reference symbol "7" denotes a bonding interface between the contact section 4 and the leg section 6.

The contact section 4 and the leg section 6 are pressure-bonded by cold-heading in a state in which a wire material of silver alloy and a wire material of copper alloy are butted. After the pressure-bonding, 300°C to 400°C of heat treatment is performed. Then, as shown by a chain line, it is caulked into a state in which the base part 2 of the leg section 6 is inserted in a hole 9 of a base-metal-plate 8 made from copper, copper alloy or the like.

In such the composite contact 1, as the silver alloy forming the contact section 4, pure-Ag based-alloy, Ag-Cu based-alloy, Ag-CuO based-alloy, Ag-Ni based-alloy, Ag-ZnO based-alloy, Ag-Pd based-alloy, Ag-SnO₂ based-alloy, Ag-CdO alloy, Ag-SnO₂-In₂O₃ based-alloy or the like can be used.

As the copper alloy forming the leg section 6, adding to pure-copper material such as tough-pitch copper, oxygen-free copper or the like, precipitation-hardening copper alloy such as Cu-Co-P-Ni-Sn-Zn based-alloy, Cu-Zr based-alloy, Cu-Zr-Cr based-alloy, Cu-Cr based-alloy, Cu-Fe-P based-alloy or the like, or solid-solution-hardening copper alloy such as Cu-Mg based alloy can be used.

Those copper alloys have Vickers hardness of 80 HV to 185 HV which is 80% to 160% of the silver alloy constituting the contact section 4 (e.g., 90 HV to 130 HV in Vickers hardness).

By suitably selecting the Vickers hardness of the copper alloy and the silver alloy in accordance with a desired contact-shape and a desired shape of the bonding interface 7, it is possible to deform the copper alloy greatly when bonding and to expand a silver-alloy layer up to an outer peripheral part of the copper alloy, so that bonding strength between the materials can be improved.

Next, a first embodiment of a method of manufacturing composite contact constituted as above will be explained.

FIG. 2 shows a forming die used for manufacturing. The forming die 11 bonds a copper-alloy wire 12 and a silver-alloy wire 13 which are cut in prescribed lengths in a primary-forming process; and forms a bonded part of a primary-formed body 15 in a secondary-forming process in one station continuously with replacing a punch 23 and a punch sleeve 24 used for a primary-forming with a punch 33 used for a secondary-forming alternately.

When manufacturing the composite contact 1, the copper-alloy wire 12 has an outer diameter which is substantially the same as or smaller than the leg section 6 of the composite contact 1. However, if an outer diameter of the silver-alloy wire 13 is the same as the copper-alloy wire 12, the silver-alloy wire 13 is too short because a used amount is small, so that it is difficult for a shear processing of the material or a handling of a clamp or the like. Therefore, the silver-alloy wire 13 having a smaller diameter than the copper-alloy wire 12 is used. Those copper-alloy wire 12 and the silver-alloy wire 13 are cut into the prescribed lengths in accordance with volumes for the composite contact 1, and then transported with being held by the clamp or the like.

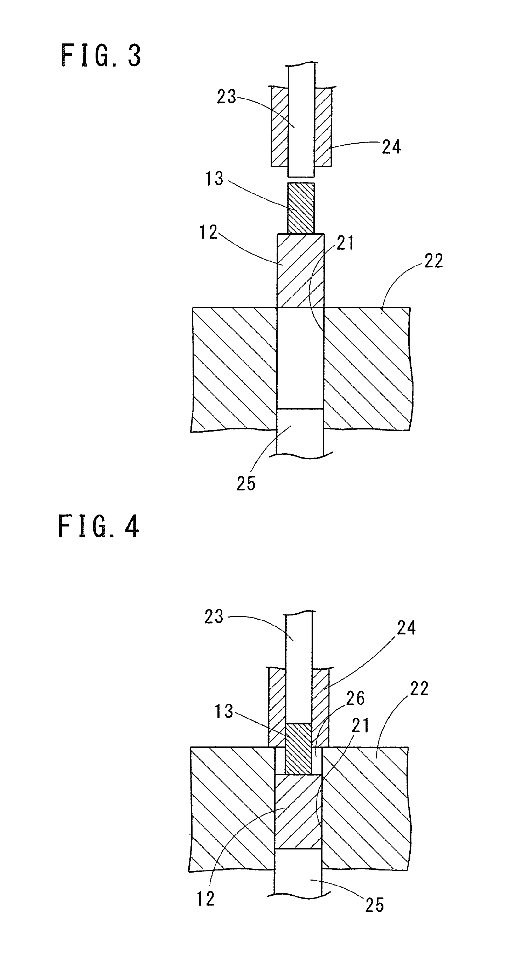

FIG. 3 to FIG. 8 explains the method of manufacturing composite contact using the forming die 11 in a sequential processing order. Below, with referring FIG. 3 to FIG. 8 and with explaining the forming die 11, the method of manufacturing will be explained in the sequential processing order.

### PRIMARY-FORMING PROCESS

In the primary-forming process: a die 22 having an opening part 21 (corresponding to a hole of the present invention: below, it is described as "hole" in the first embodiment) which hold the copper-alloy wire 12 in a state of insertion therein; the punch 23 forging the silver-alloy wire 13 so as to be stuffed into a top end of the copper-alloy wire 12 in the hole 21 along an axial direction; the punch sleeve 24 which is slidably provided outside the punch 23; and an ejector pin 25 which is slidably in the hole 21 of the die 22 and has a function of being stopped and held at a prescribed position are used. The ejector pin 25 is held at the prescribed positions in the primary-forming and the secondary-forming so as to form a part of a forging die, and has a function of ejecting the formed composite contact 1 from the hole 21 after the secondary-forming.

In this case, the hole 21 of the die 22 is slightly larger than the outer diameter of the copper-alloy wire 12 so that the copper-alloy wire 12 can be inserted; but it is formed to have an inner diameter substantially the same as it. The punch 23 is formed to have substantially the same as an outer diameter of the silver-alloy wire 13 (refer to FIG. 3). The punch sleeve 24 is formed to have an outer diameter larger than the inner diameter of the hole 21 of the die 22, so that an opening of the hole 21 can be closed around the punch 23 at a surface of the die 22 when the punch 23 faces the hole 21 of the die 22 (refer to FIG. 4). The ejector pin 25 is slid between a position in which a top end thereof is evacuated to a depth deeper than a length of the copper-alloy wire 21 from an opening end of the hole 21 (i.e., a position shown in FIG. 4) and a position in which the top end thereof is disposed at the opening end of the hole 21.

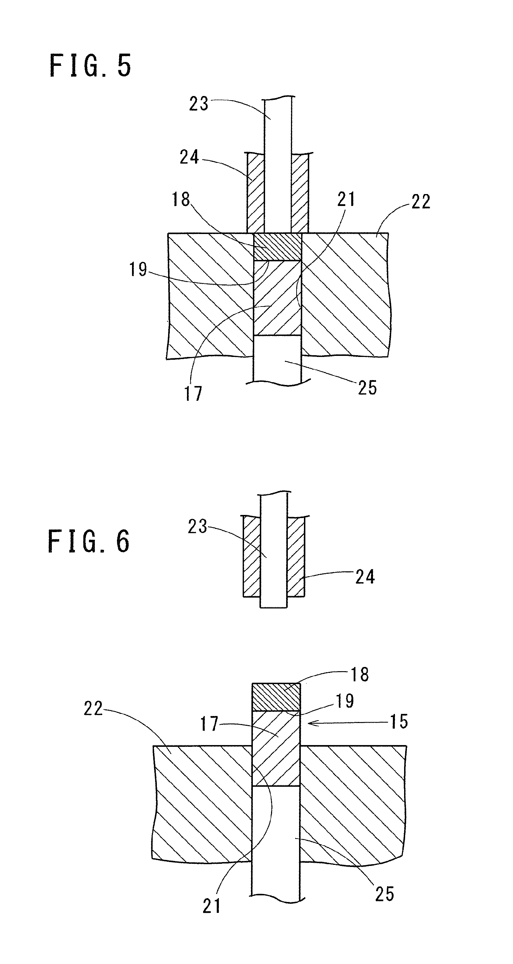

An interspace part 26 is formed between the top end of the copper-alloy wire 12 being held in the hole 21 in an insertion state to the opening end of the hole 21 in a state in which the top end of the ejector pin 25 is evacuated to a deepest position (refer to FIG. 4). In the interspace part 26, as shown in FIG. 5, the silver-alloy wire 13 is forged by the punch 23 and bonded with the copper-alloy wire 12 at a bonding interface 19.

Specifically explaining the primary-forming process, the copper-alloy wire 12 and the silver-alloy wire 13 are coaxially butted right above the hole 21 of the die 22; then, by sliding the punch 23 in the punch sleeve 24 downward, inserted into the hole 21 of the die 22 in the butted state; and fixed to be sandwiched between the ejector pin 25 which is held at the prescribed position inside. In this insertion state, as shown in FIG. 4, the whole copper-alloy wire 12 is held in the hole 21 of the die 22; and a part of the silver-alloy wire 13 is inserted in the hole 21. Accordingly, the above-described interspace part 26 is formed between a butted surface of the copper-alloy wire 12 and the opening end of the hole 21. The punch sleeve 24 is butted to an upper surface of the die 22, so that the opening of the hole 21 around the punch 23 is closed.

Next, when the punch 23 forges the copper-alloy wire 12 and the silver-alloy wire 13 in the butted state, the copper-alloy wire 12 and the silver-alloy wire 13 are squashed between the ejector pin 25 and the punch 23 along the axial direction and expanded outward in a radial direction, and as shown in FIG. 5, filled in an interspace surrounded by the copper-alloy wire 12, the inner peripheral surface of the hole 21 of the die 22, and a top end surface of the punch sleeve 24. There is a slight difference between the outer diameter of the copper-alloy wire 12 and the inner diameter of the hole 21 of the die 22 so that the copper-alloy wire 12 can be inserted since they are substantially the same diameter. Accordingly, a radial-expansion of the copper-alloy wire 12 is practically restricted by the inner peripheral surface of the hole 21, so that only the silver-alloy wire 13 is deformed in the interspace part 26 and bonded to the top end surface of the copper-alloy wire 12 while being expanded up to the inner diameter of the hole 21 of the die 22. In this primary-formed body 15: a part that was the copper-alloy wire 12 is denoted as a copper-alloy part 17; and a part that was the silver-alloy wire 13 is denoted as a silver-alloy part 18. The reference symbol 19 denotes a bonding part between the copper-alloy part 17 and the silver-alloy part 18. Because the silver-alloy wire 13 is forged in a state in which the radial-expansion of the copper-alloy wire 12 is restricted, the bonding interface 19 is formed perpendicular to the axial direction and substantially flat.

After the forging process, as shown in FIG. 6, the ejector pin 25 slides in the hole 21 of the die 22, the punch 23 and the punch sleeve 24 are synchronized, evacuated and fixed at a position for the secondary-forming. At this time, a base-end part of the silver-alloy part 18 of the primary-formed body 15 remains in the hole 21 of the die 22 in the insertion state; and a part of the copper-alloy part 17 and the silver-alloy part 18 is exposed outside the die 22, i.e., the bonding interface 19 is exposed outside the die 22.

### SECONDARY FORMING PROCESS

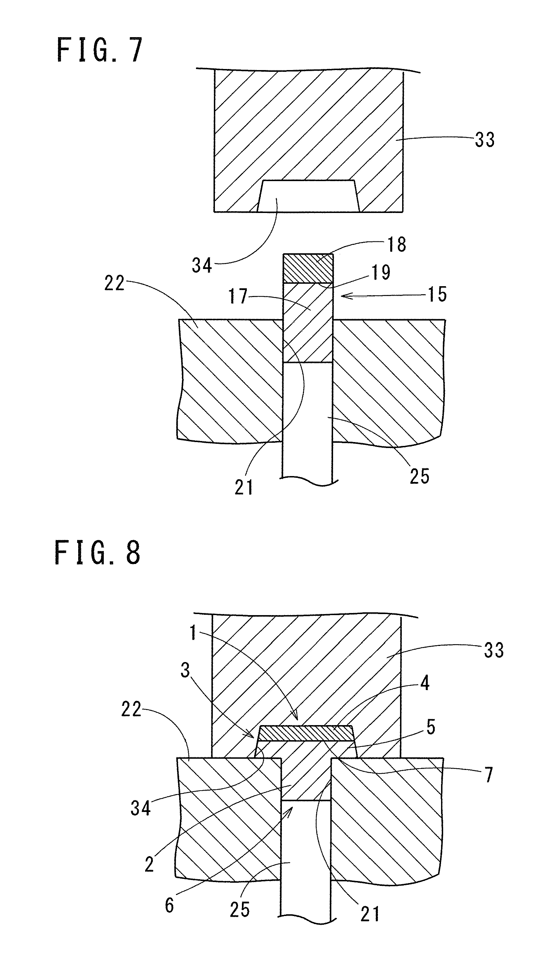

In a secondary-forming process, as shown in FIG. 7, in place of the punch 23 and the punch sleeve 24 which are used in the primary-forming process, the punch 33 is disposed right above the hole 21 of the die 22, so as to forge an end part (i.e., an end part at the silver-alloy part side) including the bonding interface 19 between the copper-alloy part 17 and the silver-alloy part 18 which are protrude from the hole 21. The punch 33 is formed to have a hollow part 34 having an inner diameter larger than the inner diameter of the hole 21 of the die 22 at a top end surface thereof, so that the hollow part 34 forms the flange section 3.

When forging along the axial direction from an upper surface of the silver-alloy part 18 by the hollow part 34 of the punch 33, as shown in FIG. 8, the primary-formed body 15 is formed into a state in which the copper-alloy part 17 and the silver-alloy part 18 protruding from the hole 21 of the die 22 are expanded in the hollow part 34 of the punch 33. At this time, in the primary-formed body 15, the copper-alloy part 17 and the silver-alloy part 18, and also the bonding interface 19 are formed to have the same outer diameter. When forging the copper-alloy part 17 and the silver-alloy part 18 by the punch 33, the bonding interface 19 of both is also pressed along the axial direction and radially spread out.

Accordingly, in the secondary-forming process, the bonding interface 19 between the copper-alloy part 17 and the silver-alloy part 18 is spread out with forming a newly-formed surface. The newly-formed surface is always pressed, so that the bonding interface 7 which is strong up to the outer peripheral edge of the flange section 3 can be obtained. Furthermore, since the bonding interface 19 is formed perpendicular to the axial direction and flat in the primary-formed body 15, the bonding interface 7 is also formed flat in the secondary-formed body. As a result, the contact section 4 having substantially even thickness can be obtained.

Finally, the composite contact 1 is pushed up by the ejector pin 25 and rejected from the die 22. The obtained composite contact 1 is bonded up to the outer peripheral edge of the flange section 3, so that a separation of the bonding interface 7 can be prevented even though a cycle-thermal-stress is generated along with open and close of a contact for a long period. Furthermore, even though the amount of silver is small, the contact section 4 of silver alloy can be obtained to have the even thickness in an entire area of the bonding interface 7 with respect to the large-diameter part 5 of copper alloy, with a stable contact-performance and an excellent durability for a long period. Moreover, since the bonding interface 7 is formed flat, it is effective to save silver.

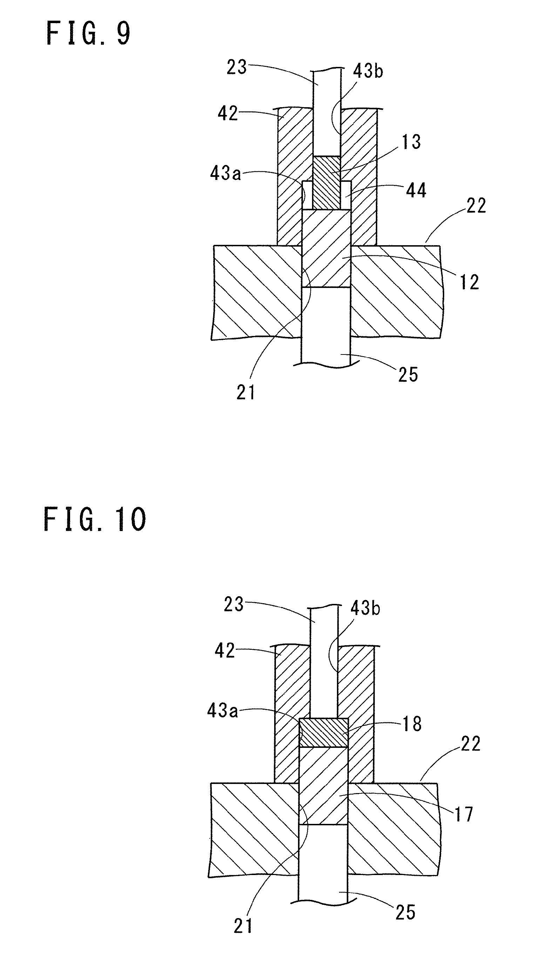

Although the ejector pin 25 is evacuated to deeper in the hole 21 of the die 22 so that the interspace part 26 is formed at the opening-end part of the hole 21 of the die 22 for forming the silver-alloy wire in the primary-forming process in the above embodiment, as a second embodiment shown in FIG. 9 and FIG. 10, it is applicable that an interspace part for forming a silver-alloy wire is formed at an upper surface of a die by a punch sleeve.

In a punch sleeve 42 (corresponding a sleeve of the present invention) used in the primary-forming process, a hole facing the opening part 21 of the die 22 is constituted to have two steps including: a large-diameter-hole part (corresponding a hole of the present invention) 43a which opens at a same inner diameter as the inner diameter of the opening part 21 of the die 22; and a guide-hole part 43b having an inner diameter same as the outer diameter of the silver-alloy wire 13 inside the large-diameter-hole part 43a. By substantially butting a top end of the punch sleeve 42 to a surface of the die 22, an interspace part 44 is formed by the large-diameter-hole part 43a which is substantially connected to the opening part 21 of the die 22. In this case, the copper-alloy wire 12 is held with being inserted in the opening part 21 of the die 22 at a base-end part thereof, so that a top end of the copper-alloy wire 12 and the silver-alloy wire 13 are disposed in the interspace part 44 of the punch sleeve 42. The silver-alloy wire 13 is forged in the interspace part 44 so as to be filled in the interspace part 44 while being squashed, and the silver-alloy wire 12 is expanded up to substantially the same outer diameter of the copper-alloy wire 12 and bonded. In an obtained primary-formed body, similarly to the above-described embodiment, a copper-alloy part 17 and a silver-alloy part 18 are bonded at substantially the same diameter, so that a bonding interface 19 is formed perpendicular to the axial direction and substantially flat. Subsequently, in the above-mentioned secondary-forming process, the flange section 3 is formed by forging an end part including the bonding interface 19 between the copper-alloy part 17 and the silver-alloy part 18.

In this embodiment, positions of the ejector pin 25 are not altered between the primary-forming process and the secondary-forming process, so that it is effective in a case in which a position of the ejector pin 25 is difficult to be changed for equipment, for example. Furthermore than the above, it is applicable, for example, for the punch sleeve 42 shown in FIG. 9 and FIG. 10, to be provided with a taper at a lower part of the large-diameter-hole part 43a in order to draw the primary-formed body 15 with ease after the primary-forming when a punch 23 and the punch sleeve 42 are evacuated.

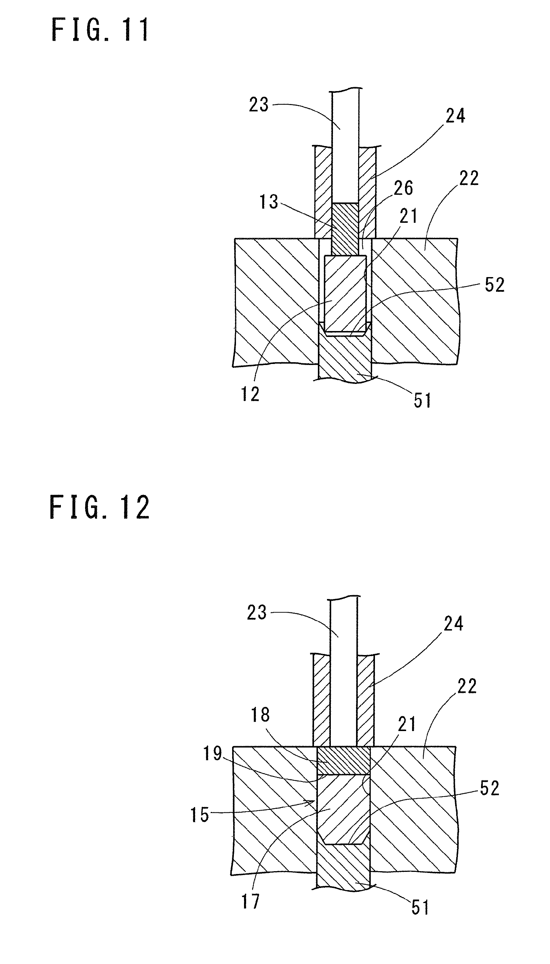

FIG. 11 and FIG. 12 show a third embodiment of the present invention. In this embodiment, in the primary-forming process, a gap is formed between the die 22 and a copper-alloy wire 12 when the copper-alloy wire 12 is inserted in the hole 21 of the die 22 because an outer diameter of the copper-alloy wire 12 is formed smaller than the inner diameter of an opening part (i.e., a hole) of the die 22 of a forming die. The gap is set so that the copper-alloy wire 12 can be smoothly inserted into the hole 21 of the die 22 in the primary-forming process. Specifically, it is desirable that a difference between the inner diameter of the hole 21 and the outer diameter of the copper-alloy wire 12 be equal to or less than 1/5 of the inner diameter of the hole 21.

On a top end part of an ejector pin 51, a hollow part 52 having a shape in which a peripheral edge part thereof is a tapered surface is formed, so that the copper-alloy wire 12 can be guided into the hollow part 51 and disposed at a center of the hole 21 of the die 22 when the copper-alloy wire 12 is inserted into the hole 21 of the die 22.

The common parts as those in the first embodiment are denoted by the same reference symbols and the explanations thereof are omitted.

In this embodiment, if forging the copper-alloy wire 12 inserted in the hole 21 of the die 22 and the silver-alloy wire 13 in a butted state, the copper-alloy wire 12 is radially-spread within the gap between the hole 21 of the die 22, but restricted so as not to further be spread by the inner peripheral surface of the hole 21. On the other hand, the silver-alloy wire 13 is bonded to the copper-alloy wire 12 with being radially-spread up to the inner peripheral surface of the hole 21, as shown in FIG. 12. As a result, a primary-formed body 15 in which the copper-alloy part 17 and the silver-alloy part 18 are bonded is formed.

Also in the primary-formed body 15, since it is forged in a state in which the radial-expansion of the copper-alloy wire 12 is restricted by the inner peripheral surface of the hole 21, a bonding interface 19 can be formed perpendicular to the axial direction and substantially flat. Then, by the above-mentioned secondary-forming process, the flange section 3 is formed by forging the end part including the bonding interface 19 between the copper-alloy part 17 and the silver-alloy part 18.

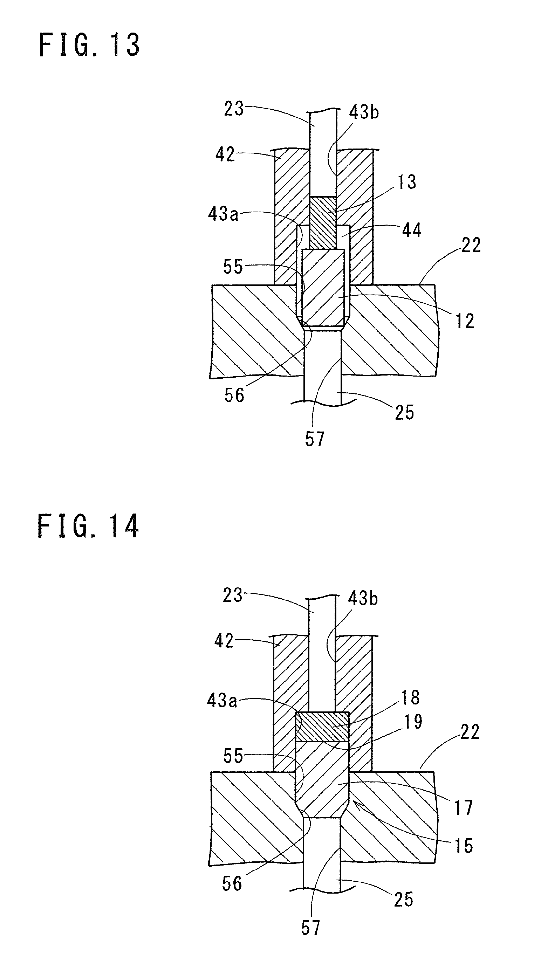

FIG. 13 and FIG. 14 show a fourth embodiment of the present invention. In this embodiment, in a primary-forming process, an outer diameter of a copper-alloy wire 12 is formed smaller than an inner diameter of an opening part (i.e., a hole) 55 of a die 22 of the forming die. Accordingly, when the copper-alloy wire 12 is inserted in the hole 55 of the die 22, a gap is formed between the die 22 and the copper-alloy wire 12. The gap is set so that the copper alloy wire 12 can be smoothly inserted into the hole 21 of the die 22 in the primary-forming process. Specifically, it is desirable that a difference between the inner diameter of the hole 21 and the outer diameter of the copper-alloy wire 12 be equal to or less than 1/5 of the inner diameter of the hole 21.

On a lower part of the hole 55 of the die 22, a tapered surface 56 is formed. Below the tapered surface, an ejector-pin-insertion hole 57 is formed. By disposing the top end surface of the ejector pin 25 at a lower end of the tapered surface 56, a hollow part is formed with the ejector pin, so that the copper-alloy wire 12 can be disposed at a center of the hole 55 of the die 22 by guiding the copper-alloy wire 12 into the hollow part when the copper-alloy wire 12 is inserted into the hole 55 of the die 22.

In addition, the hole 55 of the die 22 may have a straight-shape as in the third embodiment, and a hollow part having a tapered surface on a peripheral edge part thereof may be formed at a top end of the ejector pin. The common parts as those in the second embodiment are denoted by the same reference symbols and the explanations thereof are omitted.

In this embodiment, if forging the copper-alloy wire 12 inserted in the hole 55 of the die 22 in a state in which the silver-alloy wire 13 is butted, the copper-alloy wire 12 is radially-expanded within a gap between the hole 55 of the die 22 and a hole 43 a of a punch 42. However, by inner peripheral surfaces of the hole 55 and the hole 43a, further radial-extension is restricted. On the other hand, the silver-alloy wire 13 is radially-expanded up to an inner peripheral surface of the hole 43a and bonded with the copper-alloy wire 12. As a result, as shown in FIG. 14, a primary-formed body 15 in which a copper-alloy part 17 and a silver-alloy part 18 are bonded is formed.

Also in the primary-formed body 15, since it is forged in a state in which the radial-expansion of the copper-alloy wire 12 is restricted by the inner peripheral surfaces of the hole 55 and the hole 43a, a bonding interface 19 thereof can be formed perpendicular to the axial direction and substantially flat. Then, in the above-mentioned secondary-forming process, a flange section 3 is formed by forging an end part including the bonding interface 19 between the copper-alloy part 17 and the silver-alloy part 18.

### EXAMPLES

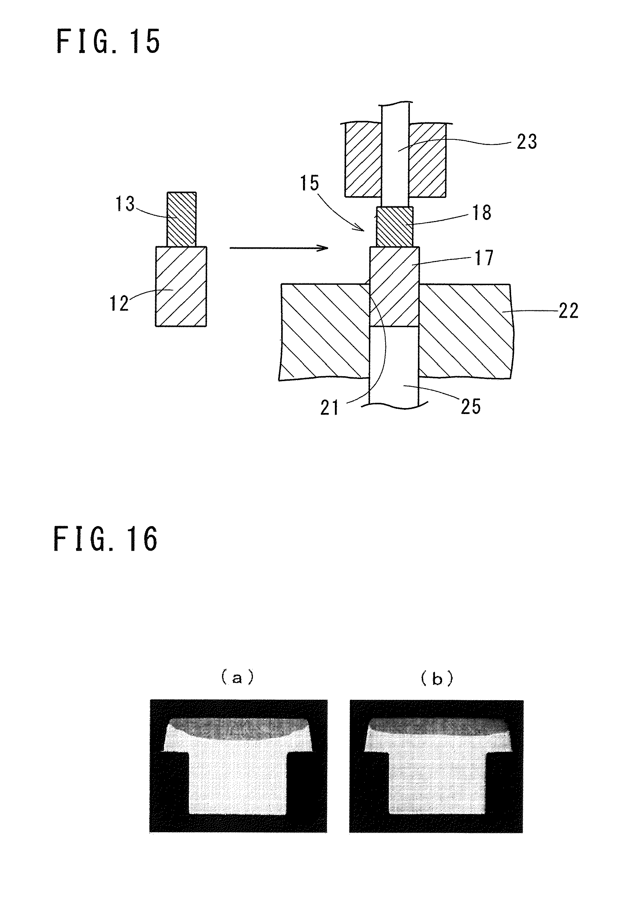

As material for the composite contact, silver-alloy wires having a diameter of 1.5 mm each consist any one of : commercially available pure-Ag based-alloy (a), Ag-SnO₂ based-alloy (b), Ag-SnO₂-In₂O₃ based-alloy (c), Ag-ZnO based-alloy (d), and Ag-Ni based-alloy (e), and cupper-alloy wires having a diameter of 1.9 mm each consist any one of: commercially available tough-pitch copper (CDA number: C11000) (p), Cu-Cr based-alloy (CDA number: C 18200) (q), Cu-Cr-Zr based alloy (the product name by Mitsubishi Shindoh Co., LTD: MZC1) (r), Cu-P-Co-Ni-Sn-Zn based-alloy (the product name by Mitsubishi Shindoh Co., LTD: HRSC) (s), Cu-Fe-P based-alloy (the product name by Mitsubishi Shindoh Co., LTD: TAMAC 194) (t), and Cu-Mg based-alloy (the product name by Mitsubishi Shindoh Co., LTD: MSP1) (u) were used. Those silver-alloy wires and copper-alloy wires were cut into prescribed lengths, paired suitably, cold-forged by the method of manufacturing of the present invention, and then heat-treated at 350°C for 30 minutes, so that composite contacts having a rivet-shape were manufactured so as to have: a contact section with a diameter of 3.5 mm; a flange section with a thickness of 0.5 mm (i.e., a thickness of the contact section was 0.15 mm and a thickness of a large-diameter part of a cupper-alloy was 0.35 mm); and a leg section with a diameter of 2.0 mm and a length of 2.0 mm. As comparative examples, as shown in FIG. 15, composite compacts were manufactured with decreasing a forging deformation-amount of a silver-alloy wire 13 in the primary-forming process so as to form a primary-formed body having a smaller diameter of a silver-alloy part 18 than a copper-alloy part 17, and cold-forging by the same method as the present invention in the secondary-forming process. Also in FIG. 15, the same reference symbols as in the embodiments are used for convenience sake of explanation.

With respect to those composite contacts, a peel strength between the contact section and the leg section and durability as contacts were evaluated.

The peel strength was measured by setting the composite contact on a shear-stress testing apparatus (TM2102D-IT made by APTEC) and measuring shear stress with adding load parallel to the bonding interface between the contact section and the leg section.

As an evaluation of a cycle-durability, the two manufactured composite contacts as a pair were fixed by caulking to a base-metal-plate made from copper having a thickness of 1 mm, mounted on an ASTM switching test device of contact points, and repetitively opened and closed. As a power-distributing condition, load voltage was 12V of direct current, with steady-state current was 24A by 0.5Ω of resistance load. A contact force and an opening force were 196 mN (i.e., 20gf) each. The closing and opening were repeated 200,000 times with turning on for 1 second and off for 4 seconds (i.e., a cycle time was 5 seconds).

If the contacts were not open after 1 second or more from a contact-opening timing, it is deemed that the contacts were welded. When the contacts were welded 10 times in total, the test was terminated even though the cycle number is less than 200,000 times.

Including samples of the terminated test without finishing a prescribed cycle number, external appearances of samples after the durability test were observed; and if necessary, the samples were embedded in a resin and grinded a section thereof in order to observe an interface between silver-alloy and copper-alloy and an interface between a copper plate which is caulked and the flange section of the contact. Decisions were denoted by symbols of "o", "Δ", and "×" in order of the durability from good to bad.

As a criterion, the symbol "⊚" denotes cases in which a remarkable separation at the interface between the silver-alloy and the copper-alloy was not generated, and the flange section of the contact was in contact with the caulk-fixed copper plate, or the appearance was not changed from an initial state of caulking-fixation: the symbol "○" denotes cases in which some separation were found at the interface between the silver-alloy and the copper-alloy, or it was not terminated by the welding until the prescribed cycle number was finished even though the flange section was observed to have a camber: and the symbol "×" denotes cases in which the separation was found at the interface between the silver-alloy and the copper-alloy, or the flange section had the camber and it was terminated by the welding before the prescribed cycle number was not finished.

**[Table 1]**

| No. | SILVER-ALLOY PART MATERIAL | COPPER-ALLOY PART MATERIAL | PEEL STRENGTH (MPa) | DURABILITY |
|---|---|---|---|---|
| Example 1 | a | p | 122 | ○ |
| Example 2 | b | p | 143 | ⊚ |
| Example 3 | c | p | 149 | ⊚ |
| Example 4 | d | p | 155 | ⊚ |
| Example 5 | e | p | 117 | ○ |
| Example 6 | b | u | 130 | ⊚ |
| Example 7 | c | s | 152 | ⊚ |
| Example 8 | e | r | 158 | ⊚ |
| Example 9 | d | q | 143 | ⊚ |
| Example 10 | c | t | 128 | ⊚ |
| Comparative Example 1 | a | p | 78 | × |
| Comparative Example 2 | c | p | 68 | × |
| Comparative Example 3 | d | p | 59 | × |

From the result shown in Table 1, it was confirmed that all the contacts of the examples had the excellent peel strength and the excellent durability. The comparative examples had low peel strength, so that the separation at the bonding surface between the silver-alloy and the copper-alloy was generated while the durability test and the durability was not enough.

Therefore, it was confirmed that the composite contact having a steady contact property for a long period and the excellent durability could be obtained according to the method of manufacturing the present invention.

By observing the sections of the examples and the comparative examples by a microscope, in the comparative example shown by the part (a) of FIG. 16, it can be found a flow line of material of the silver-alloy part is largely bent outward from the bonding interface toward radially outward from the axis. That is, in the secondary-forming process, in vicinity of the outer peripheral part of the flange section, the bonding interface between the silver-alloy part and the copper-alloy part obtained by the primary-forming cannot be radially-expanded enough, so that an end surface of the outer peripheral part of the copper-alloy part (i.e., an end surface of the wire material) and a side surface of the silver-alloy part (i.e., an outer peripheral surface of the wire material) which were not joined by the primary-forming were bonded as to be buckled. The bonding strength in vicinity of the outer peripheral part of the flange section is remarkably weak in comparison with a center part of the bonding interface.

On the other hand, in a case of the example shown in the part (b) of the same drawing, a flow line is even in comparison with that of the comparative example, a bent from the bonding interface is also smaller than that of the comparative example. This is because the copper-alloy part and the silver-alloy part are already joined at the whole surface by the primary-forming, so that the bonding interface is extended evenly and radially outward by the secondary-forming. As a result, the silver-alloy part and the copper-alloy part are strongly joined from the center part of the bonding interface to the outer peripheral part of the flange section.

The present invention is not limited to the above-described embodiments and various modifications may be made without departing from the scope of the present invention.

For example, a contact section is provided only at the one end in the above embodiment; but the contact section may be formed at both the end part by providing the silver-alloy on an end part of the base part.

### Industrial Applicability

The composite contact according to the present invention can be used for an electric contact for relays, switches, electro-magnetic switches, breakers or the like.

### Description of Reference Symbols

- 1: composite contact
- 2: base part
- 3: flange section
- 4: contact section
- 5: large-diameter part
- 6: leg section
- 7: bonding interface
- 8: base-metal-plate
- 9: hole
- 11: forming die
- 12: copper-alloy wire
- 13: silver-alloy wire
- 15: primary-formed body
- 17: copper-alloy part
- 18: silver-alloy part
- 19: bonding interface
- 21: opening part (hole)
- 22: die
- 23: punch
- 24: punch sleeve
- 25: ejector pin
- 26: interspace part
- 33: punch
- 34: hollow part
- 42: punch sleeve (sleeve)
- 43a: large-diameter-hole part
- 43b: guide-hole part
- 44: interspace part
- 51: ejector pin
- 52: hollow part
- 55: opening part (hole)
- 56: tapered surface
- 57: ejector pin

## Claims

1. A method of manufacturing composite contact in which a flange section with a large diameter is formed at an end part of a base part with a small diameter, the composite contact having: a contact section which is made from silver alloy into an upper-surface part of the flange section; and a leg section which is made from copper alloy by forming a large-diameter part on which a back surface of the contact section is joined so as to form a lower-surface part of the flange section integrally with the base part with the small diameter, comprising the steps of: a primary-forming process forging a copper-alloy wire and a silver-alloy wire having an outer diameter smaller than that of the copper-alloy wire in a hole of a forming die in a state of being butted to each other so as to form a primary-formed body comprising a silver-alloy part and a copper-alloy part so that the silver-alloy wire and the copper-alloy wire are bonded by expanding the outer diameter of the silver-alloy wire into an inner diameter of the hole in a state in which radial-expansion of the copper-alloy wire is restricted by an inner peripheral surface of the hole; and a secondary-forming process forging an end part of the primary-formed body including the silver-copper part, a bonding interface between the silver-alloy part and the copper-alloy part, and the copper-alloy part so as to form the flange section.

2. The method of manufacturing composite contact according to Claim 1, wherein: forming the hole by an opening part of a die of the forming die; and in the primary-forming process, the copper-alloy wire is held with being inserted in the hole with maintaining an interspace part between an opening-end part of the hole so that the silver-alloy wire and the copper-alloy wire are forged in the interspace part.

3. The method of manufacturing composite contact according to Claim 1, wherein: the forming die is provided with a sleeve having a same inner diameter as that of the opening part of the die so as to extend the opening part of the die; the sleeve forms the hole; and in the primary-forming process, at least a base-end part of the copper-alloy wire is held with being inserted in the opening part of the die so that the silver-alloy wire and the copper-alloy wire are forged in the hole of the sleeve.

4. The method of manufacturing composite contact according to one of Claims 1 to 3, wherein the hole is formed to have an inner diameter which is substantially a same as an outer diameter of the copper-alloy wire.

5. The method of manufacturing composite contact according to one of Claims 1 to 3, wherein the hole is formed to have an inner diameter which is larger than an outer diameter of the copper-alloy wire and is smaller than an outer diameter of the large-diameter part.
